# EUROPÄISCHE PATENTSCHRIFT

(11) **EP 2 402 114 B1**
(45) Veröffentlichungstag und Bekanntmachung des Hinweises auf die Patenterteilung: **24.10.2012**
(21) Anmeldenummer: 11170569.5
(22) Anmeldetag: 20.06.2011
(51) Int. Cl.: B23Q 11/04, G05B 19/4061

(54) **Vorrichtung und Verfahren zum Schutz einer Arbeitsspindel**
Device and method for protecting a work spindle
Dispositif et procédé de protection de broche de travail

(30) Priorität: 02.07.2010 DE 102010025900
(43) Veröffentlichungstag der Anmeldung: 04.01.2012
(73) Patentinhaber: Ott-Jakob Spanntechnik GmbH, 87663 Lengenwang (DE)
(72) Erfinder: Bonerz, Stefan, 87616 Marktoberdorf (DE); Greif, Josef, 87654 Friesenried (DE); Bechteler, Wolfgang, 87640 Ebenhofen (DE)
(74) Vertreter: Charrier, Rapp & Liebau

(56) Entgegenhaltungen:
- JP-A- 62 152 640
- JP-A- 2000 210 841

## Beschreibung

Die Erfindung betrifft eine Vorrichtung zum Schutz einer Arbeitsspindel nach dem Oberbegriff des Anspruchs 1.

Während der Programmierung bzw. dem Einrichten einer Werkzeugmaschine können durch Bedienungsfehler das Werkzeug bzw. die Arbeitsspindel beim Verfahren in x-, y- oder z-Richtung mit einem im Bearbeitungsraum vorhandenen Werkstück kollidieren. Dadurch entstehen Schäden an Lagerstellen, Verformungen von Wellen, Rissbildungen oder Materialbrüche an Werkzeug-, Spindel- oder Halterungskomponenten. Diese Schäden verursachen erhebliche Reparaturkosten, insbesondere dann, wenn optisch nicht sichtbare Schäden übersehen werden und die weitere Werkstückbearbeitung mit einem beschädigten System fortgesetzt wird.

Um diesem Problem zu begegnen, wurden mechanische Sicherungsmaßnahmen vorgeschlagen. So lehrt die DE 10 2007 032 498 A1 die Lagerung einer Arbeitsspindel in einem Spindelgehäuse an einem Ring, der gegenüber dem Spindelgehäuse federnd aufgehängt und gegenüber diesem sowohl axial verschiebbar, als auch kippbar ist. Hierdurch kann eine Überlastung der Lagerung der Arbeitsspindel sowohl in axialer, als auch in radialer Richtung abgefangen werden. Federelemente können jedoch eine Dämpfungseigenschaft nur in einem bestimmten Auslenkungsbereich erzielen. Bei ungewollten, größeren Verfahrwegen kann dennoch eine harte Kollision auftreten.

Ein messtechnischer Ansatz ist aus der DE 103 51 347 A1 bekannt. Die Werkzeugspannvorrichtung einer Arbeitsspindel ist hier mit einem Druck- oder Kraftsensor ausgerüstet, durch den in erster Linie die im normalen Betrieb auftretende Belastung der Arbeitsspindel gemessen werden soll. Als Zusatzfunktion erlaubt ein solcher Sensor auch die Feststellung einer Überlastung durch eine Kollision mit einem Werkstück. In diesem Fall kann die Spindelbewegung abgebrochen werden und es können Inspektions- bzw. Reparaturmaßnahmen eingeleitet werden. Eine zuverlässige Verhinderung von Schäden ist aber wegen der unvermeidlichen Latenzzeit der Kollisionserkennung nicht gewährleistet.

Um Kollisionen der fraglichen Art von vornherein zu vermeiden, wurde auch bereits ein rechnergestützter Vergleich des gemessenen Bewegungsablaufs einer Arbeitsspindel mit einem vorab gespeicherten Modell des Bearbeitungsraumes vorgeschlagen. Nach der EP 0 104 409 A2 sind im Bearbeitungsraum Gefahrenzonen festgelegt, bei deren Erreichung die Bewegung der Arbeitsspindel angehalten wird. Rechnergestützte Überwachungseinrichtungen besitzen den Nachteil eines hohen technischen Bedienungsaufwandes. 3D-Modelle aus der Konstruktion müssen in die Maschinensteuerung geladen werden. Gleichzeitig muss jede Bewegung der Maschine mit diesem Modell abgeglichen werden. Somit sind derartige Systeme nur in komplexen Bearbeitungszentren sinnvoll einsetzbar.

Ein weiterer Ansatz zur Kollisionsvermeidung, wie er in der JP 2006-102923 A verfolgt wird, ist die optische Überwachung des Bearbeitungsraumes. Hierzu wird der Bearbeitungsraum durch ein Kamerasystem beobachtet. und es werden aus den aufgenommenen Bildern mit Mustererkennungsalgorithmen die Konturen dort vorhandener Objekte ermittelt. Diese werden mit der vorgesehenen Bewegungsbahn der Arbeitsspindel bzw. eines in dieser gespannten Werkzeugs verglichen, um eine eventuelle Kollision vorherzusagen und durch rechtzeitigen Abbruch der Spindelbewegung zu verhindern. Optische Systeme in Kombination mit Bilderkennungsverfahren erfordern gleichfalls einen hohen Rechenaufwand, um eine echtzeitfähige Überwachung zu ermöglichen. Derartige Systeme stoßen bei schnelleren Verfahrbewegungen schnell an elektronische Verarbeitungsgrenzen. Ferner wird die Bilderkennung durch das Spritzen von Schmiermittel und das Fliegen von Spänen im Bearbeitungsraum behindert.

Die JP 62-152 640 A lehrt die Anbringung mehrerer einzelner Ultraschallsensoren an einem Spindelkopf einer Bearbeitungsmaschine zur Detektion eines Hindernisses in verschiedenen möglichen Bewegungsrichtungen der Spindel. Hierzu ist jeder möglichen Bewegungsrichtung der Spindel jeweils ein eigener Ultraschallsensor zugeordnet. Die Zuverlässigkeit der Kollisionsvermeidung hängt somit bei diesem System von der Richtcharakteristik der einzelnen Ultraschallsensoren ab.

In Anbetracht des Standes der Technik ist es die Aufgabe der Erfindung, eine neue Lösung zum Schutz einer Arbeitspindel vor Kollisionen mit Hindernissen im Bearbeitungsraum aufzuzeigen, die einfach und kostengünstig realisierbar ist und es ermöglicht, Kollisionen mit hoher Zuverlässigkeit vorausschauend zu erkennen und zu verhindern.

Diese Aufgabe wird erfindungsgemäß durch eine Vorrichtung mit den Merkmalen des Anspruchs 1 gelöst. Vorteilhafte Ausgestaltungen der Erfindung sind in den Unteransprüchen angegeben.

Erfindungsgemäß sind an einer Spindelnase, welche den Abschluss des Spindelkopfes zum Bearbeitungsraum hin bildet, eine Vielzahl von Abstandssensormodulen in einer Ausrichtung auf den Bearbeitungsraum angeordnet und mit einer gemeinsamen Signalverarbeitungseinrichtung verbunden. Diese leitet aus den von den einzelnen Abstandssensormodulen abgegebenen Messsignalen bei Vorhandensein eines Hindernisses in einem vorbestimmten Bereich des Bearbeitungsraumes ein Warnsignal ab, das über einen Ausgang der Signalverarbeitungseinrichtung an die Maschinensteuerung der Bearbeitungsmaschine übermittelt wird. Die Abstandssensormodule sind radialsymmetrisch in einem solchen Abstand zueinander angeordnet, dass sich ihre Erfassungsbereiche überlappen und sich insgesamt ein zusammenhängender Erfassungsbereich ergibt.

Als Sensortechnologien kommen in erster Linie Radar oder Ultraschall in Frage, wobei in beiden Fällen fertige Module kostengünstig auf dem Markt erhältlich sind. Durch die radialsymmetrische, d.h. äquidistante kreisförmige Anordnung der Abstandssensormodule mit einem insgesamt zusammenhängenden, lückenlosen Überwachungsbereich um die Arbeitsspindel und das Werkzeug herumwird bei einer Bewegung des Spindelkopfes eine Annäherung der Arbeitsspindel oder eines in dieser gespannten Werkzeugs an ein Hindernis im Bearbeitungsraum sicher erkannt und eine drohende Kollision kann durch einen Eingriff der Maschinensteuerung in die Bewegung des Spindelkopfes abgewendet werden.

Der Einsatz einer Vielzahl von Abstandssensormodulen eröffnet die Möglichkeit, durch deren Betrieb ein multistatisches Radar bzw. multistatisches Ultraschallsonar zu realisieren, bei dem die Bestimmung der Position eines Hindernisses rechnerisch durch Verknüpfung von Empfangssignalen mehrerer Abstandssensoren bei bekanntem Ort eines oder mehrerer Sender erfolgt. Auf diese Weise kann die Position eines Hindernisses mit besonders hoher Genauigkeit bestimmt werden.

Aufgrund der Kenntnis des beabsichtigten Bewegungsablaufes kann die Reaktion der Maschinensteuerung auf die Erkennung eines Hindernisses so angepasst werden, dass die Bewegung des Spindelkopfes nur dann abgebrochen wird, wenn er sich auf einem Kollisionskurs mit dem erkannten Hindernis befindet. Darüber hinaus kann der überwachte Raumbereich bereits an die Bewegungsrichtung des Spindelkopfes angepasst werden, wodurch der Aufwand in der Signalverarbeitung verringert und eine kürzere Reaktionszeit erzielt werden kann.

Da die Spindelnase ein Bestandteil des nicht rotierenden Spindelkopfes ist, wird durch die erfindungsgemäße Lösung die Problematik der Installation eines Sensorsystems auf einer rotierenden Systemkomponente, die mit einer entsprechenden mechanischen Belastung des Sensorsystems sowie der Notwendigkeit einer Datenübertragung von einem rotierenden zu einem nichtrotierenden Teil verbunden wäre, umgangen. Andererseits ist die relative Lage der Spindelnase gegenüber der Arbeitsspindel festliegend, so dass durch die Anordnung der Sensormodule an der Spindelnase stets eine feste räumliche Zuordnung zwischen der Arbeitsspindel und dem Überwachungsbereich der Sensormodule gegeben ist. Dies ist ein klarer Vorteil gegenüber einem an einer festen Stelle des Bearbeitungsraumes installierten Sensorsystem, gegenüber dem sich der Spindelkopf mit der Arbeitsspindel und dem Werkzeug bewegen kann, was eine aufwändige Verfolgung der Bewegungsbahn durch die Signalverarbeitung erfordert, auf die erfindungsgemäß verzichtet werden kann.

Nachfolgend wird ein Ausführungsbeispiel der Erfindung unter Bezugnahme auf die Zeichnungen beschrieben. In diesen zeigt
- Fig . 1: eine schematische Längsschnittansicht eines Teils einer mit einer erfindungsgemäßen Vorrichtung ausgerüsteten Bearbeitungsmaschine,
- Fig. 2: ein Blockschaltbild einer erfindungsgemäßen Signalverarbeitungseinrichtung,
- Fig. 3: ein Blockschaltbild einer erfindungsgemäßen Sensoranordnung.

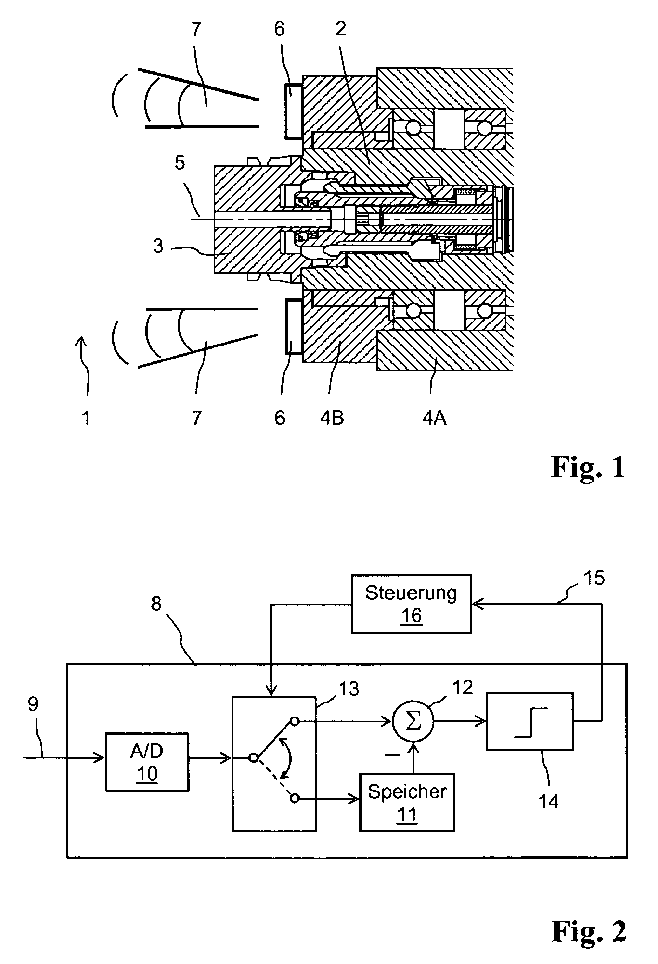

Fig. 1 zeigt das vordere, d.h. dem Bearbeitungsraum 1 einer Bearbeitungsmaschine zugewandte Ende einer Arbeitsspindel 2, in der ein Werkzeug 3 gespannt ist. Die Arbeitsspindel 2 ist in einem Spindelkopf 4A, 4B über Wälzlager gelagert und rotiert im Betrieb um ihre Längsachse 5. Gegenüber dem Bearbeitungsraum 1 wird der Spindelkopf 4A, 4B durch ein ringförmiges Teil, die sogenannte Spindelnase 4B, abgeschlossen. Der gesamte Spindelkopf 4A, 4B und mit ihm die Arbeitsspindel 2 sind auf einem Schlitten zumindest in Richtung der Längsachse 5 der Arbeitsspindel 2 verfahrbar. Es können für den Spindelkopf 4A, 4B auch weitere Freiheitsgrade der Bewegung quer zur Längsachse 5 der Arbeitsspindel 2 vorgesehen sein.

Auf der dem Bearbeitungsraum zugewandten Vorderseite der Spindelnase 4B sind am Umfang radialsymmetrisch verteilt mehrere Radarsensormodule 6 angebracht. Die Strahlungskeulen 7 der Radarsensormodule 6 sind in den Bearbeitungsraum 1 gerichtet, wobei jedes einzelne Radarsensormodul 6 nur einen Teilbereich des gesamten Bearbeitungsraumes 1 erfasst. Die Strahlungskeulen 7 einander in Umfangsrichtung der Spindelnase 4B benachbarter Radarsensormodule 6 überlappen sich jedoch, so dass durch die Gesamtheit aller Radarsensormodule 6 ein in besagter Umfangsrichtung zusammenhängender, hohlkegelförmiger Bereich des Bearbeitungsraumes 1 lückenlos erfasst wird.

Die in Fig. 1 dargestellte Form der Strahlungskeulen 7, d.h. der Öffnungswinkel und die Richtung bezüglich der Längsachse 5 der Arbeitsspindel 2, ist rein beispielhaft gemeint und kann im einzelnen Anwendungsfall an die Abmessungen des Bearbeitungsraumes 1 und an die Form des Werkzeugs 3 angepasst werden. So könnte der Öffnungswinkel sowohl größer, als auch kleiner sein, als es in Fig. 1 dargestellt ist. Er könnte auch so klein sein, dass der sich durch die Überlagerung der einzelnen Strahlungskeulen 7 insgesamt ergebende Erfassungsbereich eher die Form eines Hohlzylinders als diejenige eines Hohlkegels hat. Andererseits könnten sich die Strahlungskeulen 7 entgegen der Darstellung von Fig. 1 auch in Richtung der Längsmittelachse 5 der Arbeitsspindel 2 erweitern, so dass der nicht erfasste Raum um die Längsmittelachse 5 herum nicht zylindrisch, sondern kegelförmig wäre.

Als Radarsensormodule 6 können beispielsweise Systeme im Bereich von 24GHz oder 66GHz oder Ultrabreitband-Systeme verwendet werden. Derartige Radarsysteme sind als solche in der Automobiltechnik bekannt. Ihre Funktionsweise bedarf daher hier keiner detaillierten Erläuterung.

Ein Blockschaltbild einer erfindungsgemäßen Signalverarbeitungseinrichtung 8 zur Verarbeitung der von den Radarsensormodulen 6 gelieferten Messsignale zeigt Fig. 2. Da die Messsignale digital verarbeitet werden, ist der Eingang 9 der Signalverarbeitungseinrichtung 8 zunächst zu einem Analog/Digital-Wandler 10 geführt. Um das System nach einem Wechsel des Werkzeugs 3 zu kalibrieren, d.h. in einer definierten axialen Position des Spindelkopfes 4A, 4B die Messsignale aller Radarsensormodule 6 aufzunehmen und zu speichern, weist die Signalverarbeitungseinrichtung 8 einen Speicher 11 und einem von dem Analog/Digitalwandler 10 zu dem Speicher 11 führenden Signalpfad auf. Im normalen Betrieb werden die digitalisierten Messsignale der Radarsensormodule 6 dann nicht zu dem Speicher 11, sondern zu einem Subtrahierer 12 geleitet. Hierzu verfügt die Signalverarbeitungseinrichtung 8 über einen Umschalter 13, durch den der Analog-Digitalwandler 10 wahlweise entweder mit dem Speicher 11 oder dem Subtrahierer 12 verbunden werden kann.

Die Kalibrierung nach jedem Werkzeugwechsel ist deshalb erforderlich, weil ein Werkzeug 3 als Reflektor für Radarsignale wirkt und die Empfangssignale der Radarsensormodule 6 bei gegebenen Sendesignalen beeinflusst wobei das Ausmaß dieses Einflusses von der Form des werkzeugs 3 abhängt. Das Werkzeug 3 stellt jedoch kein Hindernis im Bearbeitungsraum 1 dar, weshalb eine Möglichkeit geschaffen werden muss, seinen Einfluss aus den Messsignalen zu eliminieren. Diesem Zweck dienen der Speicher 11, der Subtrahierer 12 und der Umschalter 13.

Die in dem Speicher 11 hinterlegten Referenzdaten enthalten die Positionen sämtlicher Objekte innerhalb des Erfassungsbereiches der Radarsensormodule 6 in dem Bearbeitungsraum 1, darunter auch diejenige des Werkzeugs 3. Diese Referenzdaten werden im Normalbetrieb durch den Subtrahierer 12 von den aktuellen Messsignalen der Radarsensormodule 6 subtrahiert. Somit kann auch eine kleine Veränderung im Bearbeitungsraum 1, d.h. das Auftreten eines kleinen Hindernisses, mit einer hohen Auflösung festgestellt werden. Eine solche Veränderung wird im Normalbetrieb durch eine einfache Schwellwertüberwachung detektiert. In Fig. 2 ist daher dem Subtrahierer 12 ein Schwellwertdetektor 14 nachgeschaltet. Überschreitet eine Abweichung der Messsignale der Radarsensormodule 6 von den in dem Speicher 11 abgelegten Kalibrierdaten eine vorbestimmte Schwelle, dann ist dies ein Indiz für das Vorhandensein eines Hindernisses im Bearbeitungsraum. Am Ausgang 15 der Signalverarbeitungseinrichtung 8 wird in diesem Fall ein Warnsignal abgegeben, welches die Gefahr einer bevorstehenden Kollision zwischen dem Werkzeug 3, der Arbeitsspindel 2 oder der Spindelnase 4B und einem Hindernis anzeigt, wobei das Werkzeug 3 aufgrund seiner aus der Arbeitsspindel 2 herausragenden Position am stärksten kollisionsgefährdet ist.

Der Ausgang 15 der Signalverarbeitungseinrichtung 8 ist mit der Maschinensteuerung 16 der Bearbeitungsmaschine verbunden. Diese bricht beim Eingang eines Kollisionswarnsignals eine gerade stattfindende Bewegung des Spindelkopfes 4A, 4B ab, um die drohende Kollision zu vermeiden, sofern die Bewegung in Richtung des Hindernisses erfolgt. Da der Maschinensteuerung die Bewegungsrichtung des Spindelkopfes 4A, 4B bekannt ist, braucht eine Bewegung im Fall der Erkennung eines Hindernisses im Erfassungsbereich der Radarsensormodule 6 nur dann abgebrochen zu werden, wenn sie auf das Hindernis zu gerichtet ist. Wenn ein Hindernis in den Erfassungsbereich gerät, der Spindelkopf 4A, 4B aber gerade in axialer Richtung zurückfährt, d.h. sich von einem erkannten Hindernis entfernt, dann kann die Bewegung fortgesetzt werden. Allerdings ist es sinnvoll, bei Erkennung eines Hindernisses in jedem Fall an einer Anzeigeeinrichtung der Maschinensteuerung 18 eine Störungsmeldung anzuzeigen, die das Bedienpersonal auf das Hindernis hinweist.

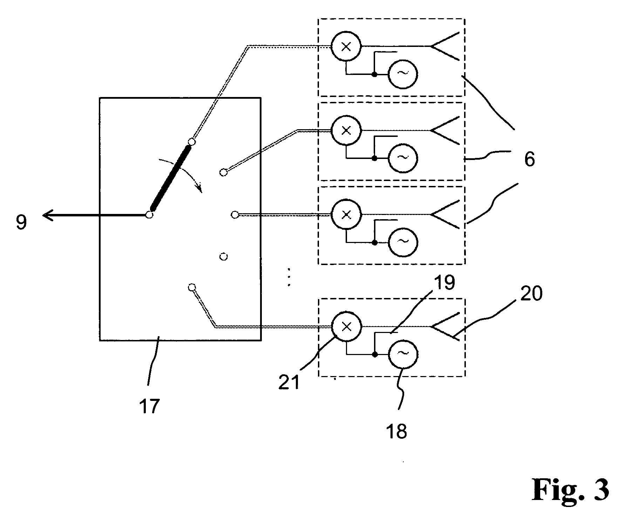

Fig. 3 zeigt Blockschaltbilder der untereinander gleichen Radarsensomodule 6, deren Ausgänge an einen Multiplexer 17 angeschlossen und über diesen mit dem Eingang 9 der Signalverarbeitungseinrichtung 8 verbunden sind. Es versteht sich, dass der Signalverarbeitungseinrichtung 8 über entsprechende Steuersignale stets die aktuelle Schalterstellung des Multiplexers 17 mitgeteilt werden muss, damit das aktuelle Messsignal dem Radarsensormodul 6, von dem es geliefert wird, zugeordnet und auf den zu diesem gehörigen Bereich des Referenzdatenspeichers 11 zugegriffen werden kann.

Jedes einzelne der radialsymmetrisch an der Stirnseite der Spindelnase 5 angeordneten Radarsensomodule 6 enthält einen Oszillator 18, einen Richtkoppler 19, eine kombinierte Sende- und Empfangsantenne 20 sowie einen Demodulator 21. Letzterer umfasst noch ein in Fig. 3 nicht dargestelltes Tiefpassfilter. Der Oszillator 18 sendet über den Richtkoppler 19 ein periodisches Signal mit fester Frequenz an die Antenne 20, welches von dieser in den Bearbeitungsraum 1 abgestrahlt wird.. Gleichzeitig wird dieses Signal direkt an den Demodulator 21 abgegeben, dessen anderer Eingang mit der Antenne 20 verbunden ist. Der Demodulator 21 transformiert somit das von der Antenne 20 empfangene Eingangssignal in das Basisband. Für den Fall, dass von der Antenne 20 kein Signal empfangen wird, ist das erzeugte Basisbandsignal theoretisch Null. Befindet sich ein reflektierendes Objekt im Abstrahl-/Empfangsbereich der Antenne 20, so führt dies zum Empfang eines Reflexionssignals durch die Antenne 20 und folglich zu einem nicht mehr verschwindenden Basisbandsignal am Ausgang des Demodulators 21.

Das Ausgangssignal jedes einzelnen Radarsensormoduls 6 enthält somit eine Information über das Vorhandensein eines reflektierenden Objektes in der Strahlungskeule 7 seiner jeweiligen Antenne 20. Es leuchtet ein, dass durch einen fortlaufenden Vergleich dieses Ausgangssignals mit einem Referenzsignal, das bei der Kalibrierung nach einem Werkzeugwechsel ohne Vorhandensein eines Hindernisses in dem Bearbeitungsraum 1 gespeichert wurde, das Auftreten eines Hindernisses festgestellt werden kann. Dieser Vergleich erfolgt wie zuvor anhand Fig. 2 erläutert durch Subtraktion des Referenzsignals vom aktuellen Signal und anschließenden Schwellwertvergleich. Je nach Schaltstellung des Multiplexers 17 wird hierbei auf einen bestimmten Teil der in dem Speicher 11 hinterlegten Referenzdaten zugegriffen, welche dem gerade von dem Multiplexer 17 durchgeschalteten Radarsensormodul 6 zugeordnet sind.

Durch die Zuordnung des aktuellen Messsignals zu einem bestimmten Radarsensormodul 6 ergibt sich bei Erkennung eines Hindernisses eine Information über dessen Winkelposition innerhalb des Bearbeitungsraumes 1 bezüglich eines Zylinderkoordinatensystems, dessen Längsachse die Längsachse 5 der Arbeitsspindel 2 ist. Diese Information wird der Maschinensteuerung 16 ebenfalls übermittelt. Falls der Spindelkopf 4A, 4B gerade eine Bewegung mit einer Komponente quer zur Längsachse 5 ausführt, dann hängt die Gefahr einer Kollision mit einem erkannten Hindernis auch von dessen Winkelposition in besagtem Zylinderkoordinatensystem ab. Folglich braucht eine solche Bewegung von der Maschinensteuerung 16 zur Vermeidung einer Kollision nur dann abgebrochen zu werden, wenn sie bezüglich besagter Winkelposition auf das Hindernis zu erfolgt.

Darüber hinaus ist es auch möglich, im Fall einer Bewegung mit einer Richtungskomponente quer zur Längsachse 5 von vornherein nur einen Teil der Radarsensormodule 6 zur Hindernisdetektion zu verwenden, nämlich diejenigen, deren Strahlungskeulen 7 in den kollisionsgefährdeten Raumbereich gerichtet sind. Beispielsweise müsste bei einer Bewegung des Spindelkopfes 4A, 4B in Fig. 1 nach oben auf jeden Fall das obere Radarsensormodul 6 zur Hindernisdetektion verwendet werden, während das untere unberücksichtigt bleiben könnte, weil in dem von ihm erfassten Raumbereich bei einer Bewegung nach oben keine Kollision mit einem Hindernis stattfinden kann.

Dies bedeutet, dass von dem Multiplexer 17 nicht alle vorhandenen 6 nacheinander auf den Eingang 9 der Signalverarbeitungseinrichtung 8 durchgeschaltet werden müssen, sondern nur diejenigen, welche einen Beitrag zur Erfassung des in der Bewegungsrichtung gelegenen Bereiches des Bearbeitungsraumes 1 leisten. Zu diesem Zweck müssen sowohl dem Multiplexer 17, als auch der Signalverarbeitungseinrichtung 8 entsprechende Steuersignale von der Maschinensteuerung 16 zugeführt werden, welche die durchzuschaltenden Eingangskanäle des Multiplexers 17 bzw. deren Zuordnung zu entsprechenden Bereichen des Speichers 11 angeben, damit der Ablauf der Signalverarbeitung entsprechend angepasst werden kann. Es versteht sich, dass dieser Ablauf dadurch beschleunigt wird, wenn nicht die Signale aller Radarsensormodule 6, sondern nur eines Teils davon verarbeitet werden müssen.

Eine weitere denkbare Option ist der Betrieb der Radarsensormodule 6 im Sinne eines multistatischen Radars. Dies bedeutet, dass ein oder mehrere Radarsensormodule 6 ausschließlich als Sender und andere Radarsensormodule 6 ausschließlich als Reflexionsempfänger betrieben werden. Aus der bekannten relativen Lage von Sendern und Empfängern können dann die axiale Position und die Winkelposition eines reflektierenden Objektes sowie sein Abstand von der Spindelnase 4B errechnet werden. Die Bestimmung der Position eines Hindernisses erfolgt in diesem Fall nicht anhand der Position eines oder mehrerer Radarsensormodule 6, welche jeweils für sich allein das Vorhandensein des Hindernisses anzeigen, sondern rechnerisch durch Verknüpfung von Empfangssignalen mehrerer Radarsensormodule 6 bei bekanntem Ort des Senders.

Die Reichweite der Hinderniserfassung kann durch eine Variation der abgestrahlten Leistung bedarfsgerecht eingestellt werden. So interessieren beispielsweise keine Reflexionen von weit entfernten Objekten, die sich außerhalb des möglichen Bewegungsbereiches des Spindelkopfes 4A, 4B bzw. des in der Arbeitsspindel 2 gespannten Werkzeugs 3 befinden, und von denen somit grundsätzlich keine Kollisionsgefahr ausgeht. Durch eine entsprechende Einstellung der Reichweite über die Sendeleistung können Reflexionen von solchen weit entfernten und daher ungefährlichen Objekten soweit verringert werden, dass sie bei der Erkennung von Hindernissen im kollisionsgefährdeten Bereich des Bearbeitungsraumes 1 nicht mehr störend wirken.

Obgleich in dem vorausgehend vorgestellten Ausführungsbeispiel eine Lösung auf der Basis von Radar, also der Abstrahlung und Reflexion kurzwelliger elektromagnetischer Signale vorgestellt wurde, kann die Erfindung ebenso gut auf der Basis von Ultraschall, also der Abstrahlung und Reflexion kurzwelliger akustischer Signale realisiert werden. Die Ultraschallsensorik ist beispielsweise auf dem Gebiet der medizinischen Diagnostik und der Automobiltechnik weit verbreitet und es sind entsprechende Sensormodule auf Ultraschallbasis ebenso auf dem Markt erhältlich wie Sensormodule auf Radarbasis.

Des weiteren wurde vorausgehend davon ausgegangen, dass der Spindelkopf 4A, 4B zumindest in Richtung der Längsmittelachse 5 der Arbeitsspindel 2 verfahrbar ist. Alternativ hierzu könnte aber auch der Spindelkopf 4A, 4B ortsfest an der Bearbeitungsmaschine angebracht sein und dafür der Träger des zu bearbeitenden Werkstücks verfahrbar sein. Auch in diesem Fall besteht die eingangs beschriebene Kollisionsgefahr und die Erfindung kann zu deren Vermeidung eingesetzt werden. Die Maschinensteuerung 16 würde dann die Bewegung des Werkstückträgers steuern und bei Erkennung einer Kollisionsgefahr abbrechen.

Die Anbringung der Radarsensormodule 6 außen an der Stirnseite der Spindelnase 4B, wie sie in Fig. 1 gezeigt ist, ist rein beispielhaft gemeint. So könnten die Module 6 auch in an der Stirnseite der Spindelnase 4B ausgebildeten Hohlräumen passender Größe untergebracht sein, oder sie könnten am Außenumfang der Spindelnase 4B angebracht sein. Entscheidend ist lediglich, dass sie an der nicht rotierenden Spindelnase 4B in einer Ausrichtung auf den Bearbeitungsraum 1 angeordnet sind, d.h. dass ihr jeweiliger Erfassungsbereich in den Bearbeitungsraum gerichtet ist.

## Patentansprüche

1. Vorrichtung zum Schutz einer Arbeitsspindel (2), die in einem Spindelkopf (4A, 4B) einer Bearbeitungsmaschine drehbar gelagert ist, und/oder eines in der Arbeitsspindel (2) gespannten Werkzeugs (3) gegen Kollisionen mit Hindernissen im Bearbeitungsraum (1) der Bearbeitungsmaschine, **dadurch gekennzeichnet, dass** an oder in einer Spindelnase (4B), welche den Abschluss des Spindelkopfes (4A, 4B) zum Bearbeitungsraum (1) hin bildet, eine Vielzahl von Abstandssensormodulen (6) in einer Ausrichtung auf den Bearbeitungsraum (1) angeordnet und mit einer gemeinsamen Signalverarbeitungseinrichtung (8) verbunden sind, die aus den von den einzelnen Abstandssensormodulen (6) abgegebenen Messsignalen bei Vorhandensein eines Hindernisses in einem vorbestimmten Bereich des Bearbeitungsraumes (1) ein Warnsignal ableitet, dass ein Ausgang (15) der Signalverarbeitungseinrichtung, an dem das Warnsignal ausgegeben wird, mit der Maschinensteuerung (16) der Bearbeitungsmaschine verbunden ist, und dass die Abstandssensormodule (6) radialsymmetrisch in einem solchen Abstand zueinander angeordnet sind, dass sich ihre Erfassungsbereiche (7) überlappen und sich insgesamt ein zusammenhängender Erfassungsbereich ergibt.

2. Vorrichtung nach Anspruch 1, **dadurch gekennzeichnet, dass** der zusammenhängende Erfassungsbereich zumindest annähernd die Form eines Hohlzylinders oder eines Hohlkegels hat.

3. Vorrichtung nach Anspruch 1 oder 2, **dadurch gekennzeichnet, dass** die Abstandssensormodule (6) Radar- oder Ultraschallsensormodule sind.

4. Vorrichtung nach einem der Ansprüche 1 bis 3, **dadurch gekennzeichnet, dass** die Signalverarbeitungseinrichtung (8) einen Speicher (11) aufweist, in dem Referenzsignale der Abstandssensormodule (6) gespeichert sind, die ohne Vorhandensein eines Hindernisses im Bearbeitungsraum (1) aufgenommen wurden, und dass die Signalverarbeitungseinrichtung (1) eine Vergleichseinrichtung (12, 14) aufweist, welche von den Sensormodulen (6) aufgenommene Messsignale mit den in dem Speicher (11) abgelegten Referenzsignalen vergleicht und bei Vorhandensein einer Abweichung vorbestimmter Mindestgröße das Warnsignal erzeugt.

5. Vorrichtung nach Anspruch 4, **dadurch gekennzeichnet, dass** die Vergleichseinrichtung (12, 14) eine mit dem Speicher (11) verbundene Subtraktionseinrichtung (12) und einen dieser nachgeschalteten Schwellwertdetektor (14) umfasst.

6. Vorrichtung nach einem der Ansprüche 1 bis 5, **dadurch gekennzeichnet, dass** das Warnsignal eine aus den Winkelpositionen der einzelnen Abstandssensoren (6) bezüglich eines Zylinderkoordinatensystems, dessen Längsachse die Längsmittelachse (5) der Arbeitsspindel (2) ist, abgeleitete Information über die Winkelposition eines erkannten Hindernisses bezüglich besagten Koordinatensystems enthält.

7. Vorrichtung nach einem der Ansprüche 1 bis 6, **dadurch gekennzeichnet, dass** durch den Betrieb der Abstandssensoren (6) ein multistatisches Radar oder multistatisches Ultraschallsonar realisiert wird, bei dem die Bestimmung der Position eines Hindernisses rechnerisch durch Verknüpfung von Empfangssignalen mehrerer Abstandssensoren (6) bei bekanntem Ort eines oder mehrerer Sender erfolgt.

8. Verfahren zum Betrieb einer Vorrichtung nach einem der Ansprüche 1 bis 7, **dadurch gekennzeichnet, dass** nach einem Wechsel eines in der Arbeitsspindel (2) gespannten Werkzeugs (3) vor einer Bewegung des Spindelkopfes (4A, 4B) zunächst, die Signale der Abstandssensormodule (6) ohne Vorhandensein eines Hindernisses im Bearbeitungsraum (1) aufgenommen und in einem Speicher (11) als Referenzsignale gespeichert werden.

9. Verfahren nach Anspruch 8, **dadurch gekennzeichnet, dass** nach der Speicherung der Referenzsignale die Signale der Abstandssensormodule (6) fortlaufend aufgenommen und auf das Auftreten einer Abweichung eines vorbestimmten Mindestmaßes von den Referenzsignalen hin überwacht werden, und dass beim Auftreten einer solchen Abweichung ein Warnsignal erzeugt und an die Maschinensteuerung (16) der Bearbeitungsmaschine abgegeben wird, welches das Vorhandensein eines Hindernisses in dem Bearbeitungsraum (1) anzeigt..

10. Verfahren nach Anspruch 9, **dadurch gekennzeichnet, dass** die Überwachung durch Subtraktion der Referenzsignale und Vergleich der jeweiligen Differenz mit einem vorbestimmten Schwellwert erfolgt.

11. Verfahren nach einem der Ansprüche 9 oder 10, **dadurch gekennzeichnet, dass** die Maschinensteuerung (16) der Bearbeitungsmaschine eine Bewegung des Spindelkopfes (4A, 4B) abbricht, wenn sie das Warnsignal empfängt.

12. Verfahren nach Anspruch 11, **dadurch gekennzeichnet, dass** das Warnsignal eine Information über die Position des Hindernisses innerhalb des Bearbeitungsraumes enthält, und dass die Bewegung des Spindelkopfes (4A, 4B) nur dann abgebrochen wird, wenn sie in Richtung des durch das Warnsignal angezeigten Hindernisses erfolgt.

13. Verfahren nach einem der Ansprüche 9 bis 12, **dadurch gekennzeichnet, dass** der Signalverarbeitungseinrichtung (8) bei einer Bewegung des Spindelkopfes (4A, 4B) von der Maschinensteuerung (16) eine Information über die Bewegungsrichtung übermittelt wird, und dass die Signalverarbeitungseinrichtung (8) bei der Überwachung der Signale der Abstandssensormodule (6) auf das Auftreten einer Abweichung eines vorbestimmten Mindestmaßes von den Referenzsignalen nur die Signale derjenigen Abstandssensormodule (6) verarbeitet, deren Erfassungsbereiche in der Bewegungsrichtung des Spindelkopfes (4A, 4B) liegen.

## Claims

1. Device for protection of a work spindle (2) mounted rotatably in a spindle head (4A, 4B) of a machine tool, and/or of a tool (3) clamped in the work spindle (2) against collisions with obstacles in the machining space (1) of the machine tool, **characterised in that** a plurality of distance sensor modules (6) are arranged aligned on the machining space (1) on or in a spindle nose (4B) which forms the end of the spindle head (4A, 4B) facing the machining space (1), and are connected with a common signal processing apparatus (8) which derives a warning signal from the measurement signals emitted by the individual distance sensor modules (6) when an obstacle is present in a predetermined area of the machining space (1), **in that** an output (15) of the signal processing apparatus at which the warning signal is emitted, is connected with the machine control (16) of the machine tool, and **in that** the distance sensor modules (6) are arranged in radial symmetry at such a distance from one another that their detection fields (7) overlap, resulting overall in a coherent detection field.

2. Device according to claim 1, **characterised in that** the coherent detection field has at least roughly the form of a hollow cylinder or a hollow cone.

3. Device according to claim 1 or 2, **characterised in that** the distance sensor modules (6) are radar or ultrasound sensor modules.

4. Device according to one of claims 1 to 3, **characterised in that** the signal processing apparatus (8) exhibits a memory (11) in which are stored reference signals of the distance sensor modules (6) which were recorded without the presence of an obstacle in the machining space (1), and **in that** the signal processing apparatus (8) exhibits a comparison apparatus (12, 14) which compares measurement signals received from the sensor modules (6) with the reference signals stored in the memory (11) and produces the warning signal when a deviation of a predetermined minimum magnitude is present.

5. Device according to claim 4, **characterised in that** the comparison apparatus (12, 14) comprises a subtraction apparatus (12) which is connected to the memory (11), and a threshold value detector (14) which is connected in series with this subtraction apparatus.

6. Device according to one of claims 1 to 5, **characterised in that** the warning signal contains information about the angular position of a detected obstacle with respect to a cylinder co-ordinate system derived from the angular positions of the individual distance sensors (6) with respect to said co-ordinate system the longitudinal axis of which is the longitudinal central axis (5) of the work spindle (2).

7. Device according to one of claims 1 to 6, **characterised in that** the operation of the distance sensors (6) creates a multi-static radar or multi-static ultrasound sonar with which the position of an obstacle is determined arithmetically by linking signals received from a plurality of distance sensors (6) when the location of one or more transmitters is known.

8. Method for operation of a device according to one of claims 1 to 7, **characterised in that** after a tool (3) clamped in the work spindle (2) is changed, prior to movement of the spindle head (4A, 4B) first the signals of the distance sensor modules (6) are recorded without the presence of an obstacle in the machining space (1) and stored in a memory (11) as reference signals.

9. Method according to claim 8, **characterised in that** after the storage of the reference signals the signals of the distance sensor modules (6) are recorded continuously and monitored for the appearance of a deviation of a predetermined minimum amount from the reference signals, and **in that** when such a deviation appears a warning signal is produced and sent to the machine control (16) of the machine tool, indicating the presence of an obstacle in the machining space (1).

10. Method according to claim 9, **characterised in that** the monitoring is effected by subtraction of the reference signals and comparison of the respective difference with a predetermined threshold value.

11. Method according to one of claims 9 or 10, **characterised in that** the machine control (16) of the machine tool aborts a movement of the spindle head (4A, 4B) when it receives the warning signal.

12. Method according to claim 11, **characterised in that** the warning signal contains information about the position of the obstacle within the machining space, and **in that** the movement of the spindle head (4A, 4B) is only aborted when it is taking place in the direction of the obstacle indicated by the warning signal.

13. Method according to one of claims 9 to 12, **characterised in that** when the spindle head (4A, 4B) moves, the machine control (16) transmits information about the direction of movement to the signal processing apparatus (8), and **in that** when monitoring the signals of the distance sensor modules (6) for the appearance of a deviation of a predetermined minimum amount from the reference signals the signal processing apparatus (8) only processes the signals of those distance sensor modules (6) whose detection fields lie in the direction of movement of the spindle head (4A, 4B).

## Revendications

1. Dispositif de protection d'une broche de travail (2) qui est logée de manière rotative dans une tête de broche (4A, 4B) d'une machine-outil et/ou d'un outil (3) serré dans la broche de travail (2) contre des collisions avec des obstacles dans l'espace d'usinage (1) de la machine-outil, **caractérisé en ce qu'**une pluralité de modules de capteur de distance (6) est disposée en étant orientée sur l'espace d'usinage (1) sur ou dans un nez de broche (4B) qui forme l'arête de la tête de broche (4A, 4B) vers l'espace d'usinage (1) et est reliée à un dispositif de traitement de signal commun (8) qui déduit un signal d'avertissement à partir des signaux de mesure délivrés par les modules de capteur de distance individuels (6) en cas de présence d'un obstacle dans une zone prédéterminée de l'espace d'usinage (1), **en ce qu'**une sortie (15) du dispositif de traitement de signal, auquel est transmis le signal d'avertissement, est reliée à la commande machine (16) de la machine-outil, et **en ce que** les modules de capteur de distance (6) sont disposés de manière symétrique dans le sens radial à une telle distance les uns des autres que leurs zones de détection (7) se chevauchent et il résulte dans l'ensemble une zone de détection continue.

2. Dispositif selon la revendication 1, **caractérisé en ce que** la zone de détection continue présente au moins approximativement la forme d'un cylindre creux ou d'un cône creux.

3. Dispositif selon la revendication 1 ou 2, **caractérisé en ce que** les modules de capteur de distance (6) sont des modules de capteur radar ou à.

4. Dispositif selon l'une quelconque des revendications 1 à 3, **caractérisé en ce que** le dispositif de traitement de signal (8) présente une mémoire (11), dans laquelle des signaux de référence des modules de capteur de distance (6) sont mémorisés, lesquels ont été enregistrés sans présence d'un obstacle dans l'espace d'usinage (1), et **en ce que** le dispositif de traitement de signal (1) présente un dispositif de comparaison (12, 14) qui compare des signaux de mesure enregistrés par les modules de capteur (6) avec les signaux de référence stockés dans la mémoire (11) et génère le signal d'avertissement en cas de présence d'un écart par rapport à la grandeur minimale prédéterminée.

5. Dispositif selon la revendication 4, **caractérisé en ce que** le dispositif de comparaison (12, 14) comporte un dispositif de soustraction (12) relié à la mémoire (11) et un détecteur de valeur seuil monté en aval de celui-ci.

6. Dispositif selon l'une quelconque des revendications 1 à 5, **caractérisé en ce que** le signal d'avertissement contient une information déduite des positions angulaires des capteurs de distance individuels (6) par rapport à un système de coordonnées cylindriques, dont l'axe longitudinal est l'axe médian longitudinal (5) de la broche de travail (2), sur la position angulaire d'un obstacle reconnu par rapport audit système de coordonnées.

7. Dispositif selon l'une quelconque des revendications 1 à 6, **caractérisé en ce qu'**un radar multistatique ou un sonar à ultrasons multistatique est réalisé par le fonctionnement des capteurs de distance (6), pour lequel la détermination de la position d'un obstacle est effectuée par calcul par combinaison de signaux de réception de plusieurs capteurs de distance (6) à un endroit connu d'un ou de plusieurs émetteurs.

8. Procédé de fonctionnement d'un dispositif selon l'une quelconque des revendications 1 à 7, **caractérisé en ce que** les signaux des modules de capteur de distance (6) sont tout d'abord enregistrés sans présence d'un obstacle dans l'espace d'usinage (1) après un changement d'un outil (3) serré dans la broche de travail (2) avant un mouvement de la tête de broche (4A, 4B) et sont stockés dans une mémoire (11) comme signaux de référence.

9. Procédé selon la revendication 8, **caractérisé en ce qu'**après la mémorisation des signaux de référence, les signaux des modules de capteur de distance (6) sont enregistrés en continu et la survenue d'un écart par rapport à une mesure minimale prédéterminée des signaux de référence est surveillée, et **en ce que** lors de la survenue d'un tel écart, un signal d'avertissement est généré et transmis à la commande machine (16) de la machine-outil, lequel signal d'avertissement indique la présence d'un obstacle dans l'espace d'usinage (1).

10. Procédé selon la revendication 9, **caractérisé en ce que** la surveillance est effectuée par soustraction des signaux de référence et comparaison de la différence respective avec une valeur seuil prédéterminée.

11. Procédé selon l'une quelconque des revendications 9 ou 10, **caractérisé en ce que** la commande machine (16) de la machine-outil interrompt un mouvement de la tête de broche (4A, 4B) lorsqu'elle reçoit le signal d'avertissement.

12. Procédé selon la revendication 11, **caractérisé en ce que** le signal d'avertissement contient une information sur la position de l'obstacle dans l'espace d'usinage et **en ce que** le mouvement de la tête de broche (4A, 4B) n'est interrompu que s'il est réalisé en direction de l'obstacle indiqué par le signal d'avertissement.

13. Procédé selon l'une quelconque des revendications 9 à 12, **caractérisé en ce qu'**une information sur le sens de mouvement est transmise au dispositif de traitement de signal (8) lors d'un mouvement de la tête de broche (4A, 4B) par la commande machine (16), et **en ce que** le dispositif de traitement de signal (8) ne traite que les signaux des modules de capteur de distance (6) dont les zones de détection se situent dans le sens de mouvement de la tête de broche (4A, 4B), lors de la surveillance de la survenue d'un écart par rapport à une mesure minimale prédéterminée des signaux de référence des signaux des modules de capteur de distance (6).
